# EUROPEAN PATENT APPLICATION

(11) **EP 1 775 195 A2**
(43) Date of publication of application: **18.04.2007**
(21) Application number: 06076785.2
(22) Date of filing: 27.09.2006
(51) Int. Cl.: B62D 1/19

(54) **Steering column mounting**

(30) Priority: 17.10.2005 US 251954
(71) Applicant: Delphi Technologies, Inc., Troy, Michigan 48007 (US)
(72) Inventor: Russell, James Cosens, Fairgrove, MI 48733 (US); Freudenstein, Thomas, Saginaw, MI 48603 (US); Hoffman, Barry L., Saginaw, MI 48604 (US); Sizelove, Bradley J., Saginaw, MI 48609 (US); Dubay, Robert W., Saginaw, MI 48603 (US); Beach, Timothy D., Saginaw, MI 48603 (US); Dubay, Kurt Daniel, Merril, MI 48637 (US)
(74) Representative: Denton, Michael John

(57) **Abstract**

The invention provides a mounting assembly (10, 12, 14, 16, 10a, 12a) for a steering column of a vehicle and a method for mounting a steering column to a vehicle. The mounting assembly (10, 12, 14, 16, 10a, 12a) includes a steering column member (18, 20, 18a) having a first aperture (22, 24, 22a) extending along an aperture axis (26, 28, 26a). The mounting assembly (10, 12, 14, 16, 10a, 12a) also includes a rigid member (30, 32, 34a) extending between first and second ends (36, 38, 40, 42, 36a, 38a) along the aperture axis (26, 28, 26a) in the first aperture (22, 24, 22a). The mounting assembly (10, 12, 14, 16, 10a, 12a) also includes a resilient member (44, 46, 44a) extending along the aperture axis (26, 28, 26a) in the first aperture (22, 24, 22a) past at least one of the first and second ends (36, 38, 40, 42, 36a, 38a) of the rigid member (30, 32, 34a).

## Description

### TECHNICAL FIELD

The invention relates to mounting a steering column to a vehicle.

### BACKGROUND OF THE INVENTION

Many production steering column assemblies are mounted to the vehicle using threaded studs from the instrument panel through mounting points on the steering column. The studs can receive flanged mounting nuts that are torqued as desired. Vibration generated at various locations in the vehicle can be transmitted through the vehicle and the studs to the steering column and felt by the driver.

### SUMMARY OF THE INVENTION

The invention provides a mounting assembly for a steering column of a vehicle and a method for mounting a steering column to a vehicle. The mounting assembly includes a steering column member having a first aperture extending along an aperture axis. The mounting assembly also includes a rigid member extending between first and second ends along the aperture axis in the first aperture. The mounting assembly also includes a resilient member extending along the aperture axis in the first aperture past at least one of the first and second ends of the rigid member.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a top view of a mounting assembly for a steering column of a vehicle according to a first exemplary embodiment of the invention;
Figure 2 is a cross-sectional view taken along section lines 2 - 2 in Figure 1;
Figure 3 is a cross-sectional view taken along section lines 3 - 3 in Figure 1;
Figure 4 is a perspective view with partial cross-section of the first exemplary embodiment of the invention;
Figure 5 is a perspective view of a mounting assembly for a steering column of a vehicle according to a second exemplary embodiment of the invention;
Figure 6 is a cross-sectional view taken along section lines 6 - 6 in Figure 5; and
Figure 7 is a cross-sectional view taken along section lines 7 - 7 in Figure 6.

### DESCRIPTION OF THE PREFERRED EMBODIMENTS

A plurality of different embodiments of the invention is shown in the Figures of the application. Similar features are shown in the various embodiments of the invention. Similar features have been numbered with a common reference numeral and have been differentiated by an alphabetic designation. Also, to enhance consistency, features in any particular drawing share the same alphabetic designation even if the feature is shown in less than all embodiments. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

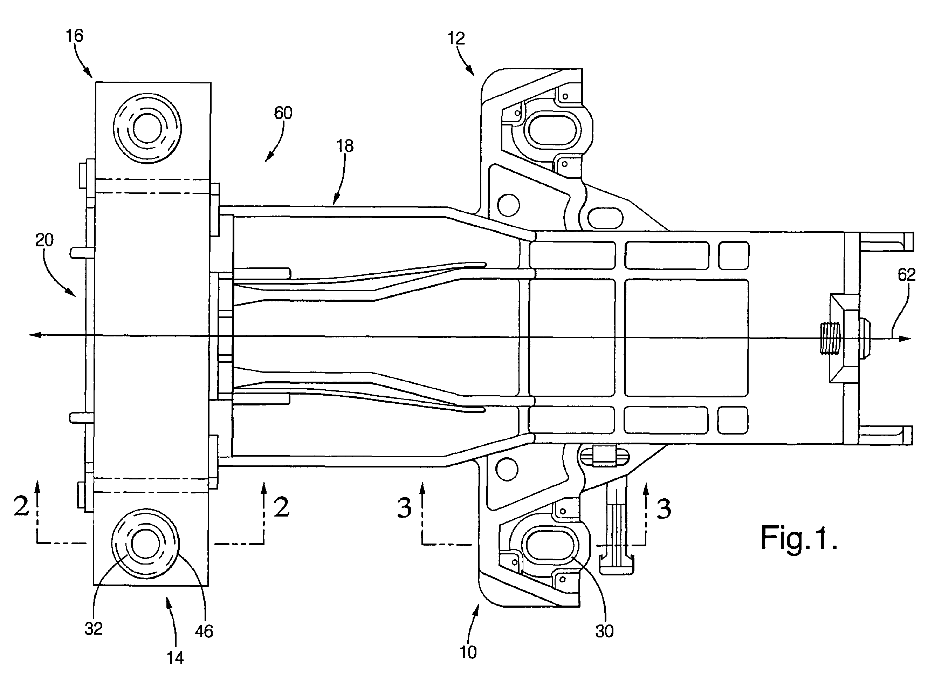

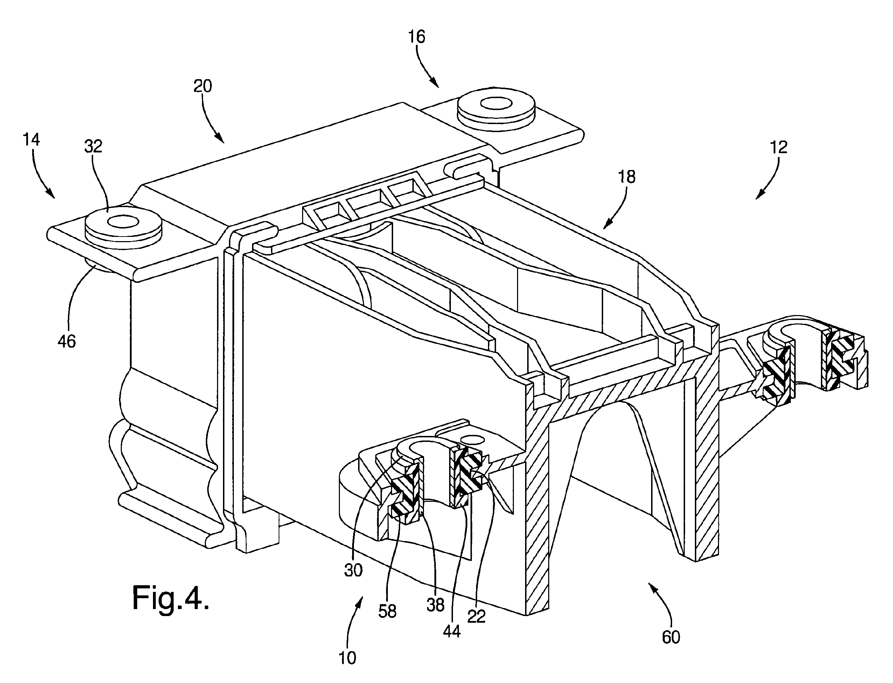

Referring now to Figures 1 - 4, in a first exemplary embodiment of the invention, a steering column assembly 60 includes steering column members 18, 20. The steering column members 18, 20 can be integrally formed or can be engaged with one another. Mounting assemblies 10, 12, 14, 16 mount the steering column assembly 60 to a vehicle 64. Steering column member 18 has an aperture 22 for receiving the mounting assembly 10 and steering column member 20 has an aperture 24 for receiving the mounting assembly 14. The aperture 22 extends along an aperture axis 26 and the aperture 24 extends along an aperture axis 28. The steering column assembly 60 extends along a column axis 62. The first and second apertures 22, 24 are spaced from one another along the column axis 62. The aperture (unnumbered) for receiving the mounting assembly 12 is mirrored from the aperture 22 across the column axis 62.

Each of the mounting assemblies 10, 12, 14, 16 includes a rigid member, such as rigid members 30, 32 of the mounting assemblies 10, 14, respectively. The mounting assembly 12 is constructed similarly as the mounting assembly 10 and the mounting assembly 16 is constructed similarly as the mounting assembly 14. The rigid members 30, 32 extend between respective first ends 36, 40 and second ends 38, 42 along the respective aperture axis 26, 28 in the respective apertures 22, 24.

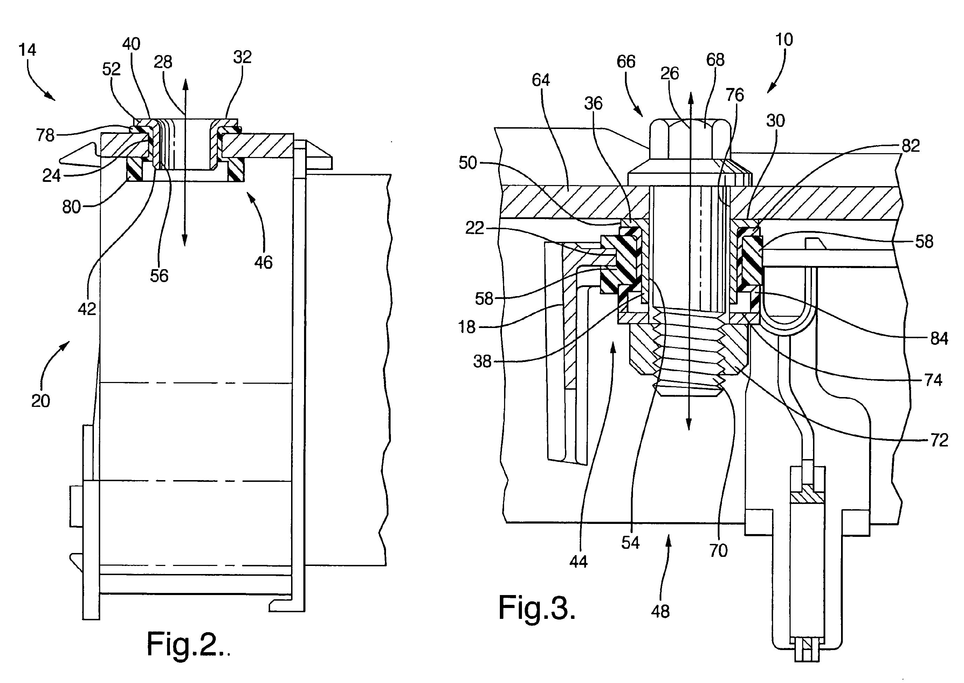

Each of the mounting assemblies 10, 14 also includes a resilient member 44, 46, respectively. The resilient members 44, 46 extend along the corresponding aperture axis 26, 28 in the corresponding aperture 22, 24 past at least one of the first and second ends 36, 38, 40, 42 of the adjacent rigid member 30, 32. A compressing device, such as compressing device 48, can be encircled by one of the rigid members 30, 32 and compress the corresponding resilient member 44, 46. Compression of the resilient member 44, 46 is limited by the rigid member 30, 32. The exemplary compression device 48 is best shown in Figure 3 and includes a bolt 66 having a bolt head 68 and a shank 70. The exemplary compression device 48 also includes a nut 72 and a washer 74. The shank 70 extends through an aperture 76 of the vehicle and through the rigid member 30. The washer 74 and nut 72 are diposed over the shank 76 and the nut 72 is tightened. As the nut 72 is tightened, the resilient member 44 is compressed. Increasing compression stops when the washer 74/nut 72 contacts the second end 38 of the rigid member 30. Compression of the other mounting assemblies 12, 14, 16 can occur in the same way, or can occur in different ways.

The exemplary rigid members 30, 32 include flange portions 50, 52 at the first ends 36, 40. A compressing device similar to compressing device 48 could compress a portion of the resilient member 46 between the flange portion 52 and the steering column member 20. The rigid members 30, 32 also include sleeve portions 54, 56 extending away from the flange portions 50, 52 to the second ends 38, 42. The exemplary resilient members 44, 46 extend past the second ends 38, 42. However, in alternate embodiments of the invention, one or both of the resilient members 44, 46 could extend past the first ends 36, 40.

The resilient members 44, 46 isolate the steering column members 18, 20 from the rigid members 30, 32. As a result, vibration transmitted through the vehicle 64 and through the rigid members 30, 32 is substantially prevented from being transmitted to the steering column members 18, 20. Furthermore, vibration is substantially prevented from being transmitted to a driver of the vehicle 64.

One or both of the resilient members 44, 46 can be formed in situ with respect to one or both the steering column members 18, 20 and the rigid members 30, 32. Alternatively, one or both of the resilient members 44, 46 can be formed separately from both of the respective steering column member 18, 20 and the respective rigid member 30, 32. Such a resilient members 44, 46 could be placed in the respective aperture 22, 24 to receive the respective rigid member 30, 32 or could be placed over the respective rigid member 30, 32 for insertion in the respective aperture 22, 24.

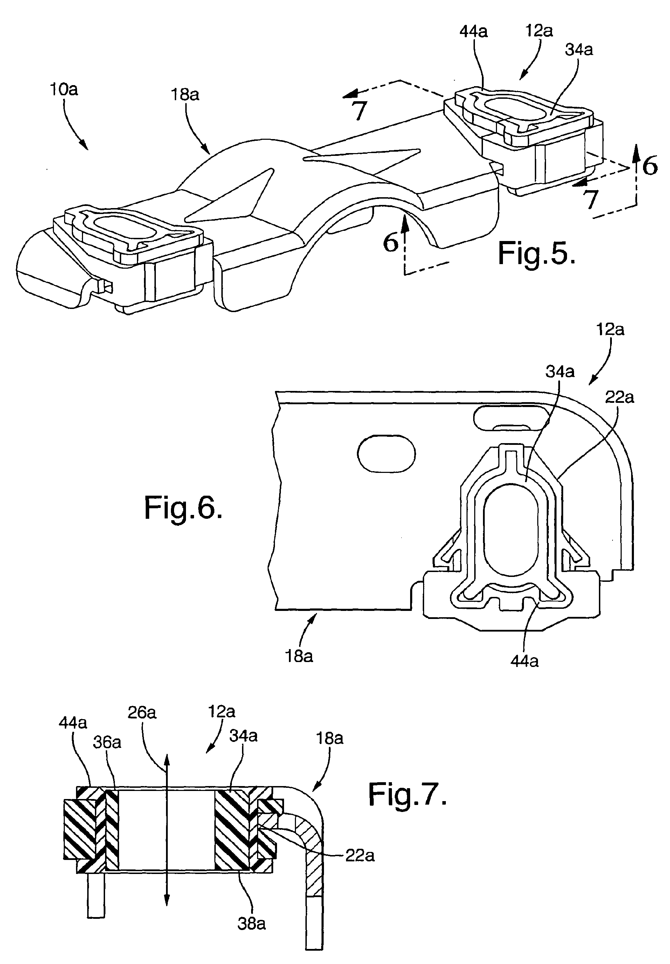

Referring now to Figure 5, mounting assemblies 10a, 12a mount a steering column to a vehicle. A steering column member 18a has a first aperture 22a extend along an aperture axis 26a. The mounting assembly 10a includes a rigid member 34a extending between first and second ends 36a, 38a along the aperture axis 26a in the first aperture 22a. The mounting assembly 10a also includes a resilient member 44a extending along the aperture axis 26a in the first aperture 22a past at least one of the first and second ends 36a, 38a of the rigid member 34a. The mounting assembly 12a is constructed similarly as the mounting assembly 10a.

The exemplary rigid member 34a is a capsule operable to separate from the steering column member 18a in an impact situation. The structure and operation of the capsule 34a is set forth more fully in co-pending application serial number 11/037,313, which is hereby incorporated by reference. In the first exemplary embodiment of the invention, shown in Figures 1 - 4, a capsule 58 operable to separate from the steering column member 18 in an impact situation encircles the rigid member 30. As a result, the resilient bushing 46 engages the steering column assembly 60 directly and the resilient member 44 engages the steering column assembly 60 indirectly.

Referring to Figure 2, a first portion 78 of the resilient member 46 can be compressed directly between the steering column member 20 and the flange portion 52 with a compressing device similar to compressing device 48. A second portion 80 of the resilient member 46 can be compressed directly against the steering column member 20 and a compressing device, such as a nut 72 and/or washer 74 of the compressing device 48. Referring to Figure 3, a first portion 82 of the resilient member 44 is compressed between the flange portion 50 and the capsule 58 with the compressing device 48. A second portion 84 of the resilient member 44 is compressed between the washer 74 and capsule 58.

The predetermined amount of compression applied to each of the resilient members 44, 46 can be selected based on the natural frequency of the corresponding steering column member 18, 20. Also, a material for forming the resilient member 44, 46 can be selected in response to the natural frequency of the steering column member 18, 20. Generally, lowering the natural frequency of the steering column is desirable. In one example, if the natural frequency of the corresponding steering column member 18, 20 is relatively high and lowering the frequency is desired, a lower durometer of rubber can be selected to form the resilient members 44, 46 and/or the amount of compression can be relatively low. Generally, compression of the resilient members 44, 46 relates to dampening inversely. In other words, increased compression results in diminished dampening, generally. Also, generally, the durometer of the resilient members 44, 46 relates to dampening inversely. In other words, increased durometer results in diminished dampening, generally. If the natural frequency of the corresponding steering column member 18, 20 is relatively low and relatively high dampening of the steering column is not required, a higher durometer of rubber can be selected to form the resilient members 44, 46 and/or the amount of compression can be relatively high. Another factor that can be varied in response to the natural frequency of the steering column is the height of the portion 78. Generally, the height of the portion 78 relates to dampening directly. In other words, increased height results in enhanced dampening, generally. In one embodiment of the invention, the resilient members 44, 46 can be made of a natural rubber with a durometer of 45. The height of the portion 78 can be 3.5 mm thick as molded. When the steering column is installed into the vehicle, the portion 78 is compressed to approximately 1.0 mm.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A mounting assembly (10, 12, 14, 16, 10a, 12a) for a steering column of a vehicle comprising:
a steering column member (18, 20, 18a) having a first aperture (22, 24, 22a) extending along an aperture axis (26, 28, 26a);
a rigid member (30, 32, 34a) extending between first and second ends (36, 38, 40, 42, 36a, 38a) along said aperture axis (26, 28, 26a) in said first aperture (22, 24, 22a); and
a resilient member (44, 46, 44a) extending along said aperture axis (26, 28, 26a) in said first aperture (22, 24, 22a) past at least one of said first and second ends (36, 38, 40, 42, 36a, 38a) of said rigid member (30, 32, 34a).

2. The mounting assembly (10, 12, 14, 16, 10a, 12a) of claim 1 further comprising:
a compressing device (48) encircled by said rigid member (30, 32, 34a) for compressing said resilient member (44, 46, 44a), wherein compression of said resilient member (44, 46, 44a) being limited by said rigid member (30, 32, 34a).

3. The mounting assembly (10, 12, 14, 16) of claim 2 wherein said rigid member (30, 32) includes a flange portion (50, 52) at said first end (36, 40) and said compressing device (48) being operable to compress said resilient member (44, 46) between said flange portion (50, 52) and said steering column member (18, 20).

4. The mounting assembly (10, 12, 14, 16) of claim 3 wherein said rigid member (30, 32) includes a sleeve portion (54, 56) extending away from said flange portion (50, 52) to said second end (38, 42, 38a) and said resilient member (44, 46, 44a) extending past said second end (38, 42).

5. The mounting assembly (10, 12, 14, 16, 10a, 12a) of claim 1 wherein said resilient member (44, 46, 44a) is further defined as isolating said steering column member (18, 20, 18a) from said rigid member (30, 32, 34a).

6. The mounting assembly (10, 12, 14, 16, 10a, 12a) of claim 1 wherein said resilient member (44, 46, 44a) is formed in situ with respect to said steering column member (18, 20, 18a) and said rigid member (30, 32, 34a).

7. The mounting assembly (10, 12, 14, 16, 10a, 12a) of claim 1 wherein said rigid member (30, 32, 34a) is further defined as a capsule (34a) operable to separate from said steering column member (18, 20, 18a) in an impact situation.

8. The mounting assembly (10, 12, 14, 16, 10a, 12a) of claim 1 further comprising:
a capsule (58) operable to separate from said steering column member (18, 20, 18a) in an impact situation and encircling said rigid member (30, 32, 34a).

9. A method for mounting a steering column to a vehicle comprising the steps of:
extending a first aperture (22, 24, 22a) of a steering column member (18, 20, 18a) along an aperture axis (26, 28, 26a);
extending a rigid member (30, 32, 34a) between first and second ends (36, 38, 40, 42, 36a, 38a) along the aperture axis (26, 28, 26a) in the first aperture (22, 24, 22a); and
extending a resilient member (44, 46, 44a) along the aperture axis (26, 28, 26a) in the first aperture (22, 24, 22a) past at least one of the first and second ends (36, 38, 40, 42, 36a, 38a) of the rigid member (30, 32, 34a).

10. The method of claim 8 further comprising the step of:
isolating the steering column member (18, 20, 18a) from the rigid member (30, 32, 34a) with the resilient member (44, 46, 44a).

11. The method of claim 8 further comprising the step of:
compressing the resilient member (44, 46, 44a) against the steering column member (18, 20, 18a) with a compressing device (48).

12. The method of claim 10 wherein said compressing step further comprises the steps of:
disposing a portion of the resilient member (44, 46, 44a) between a first portion of the rigid member (30, 32, 34a) and the steering column member (18, 20, 18a);
moving the steering column member (18, 20, 18a) closer to the first portion of the rigid member (30, 32, 34a) with the compressing device (48); and
positioning a second portion of the rigid member (30, 32, 34a) to positively limit movement of the compressing device (48) and limit compression of the resilient member (44, 46, 44a).

13. The method of claim 10 further comprising the step of:
selecting a predetermined amount of compression of the resilient member (44, 46, 44a) in response to a natural frequency of the steering column member (18, 20, 18a).

14. The method of claim 8 further comprising the step of:
releasibly engaging the resilient member (44, 46, 44a) with the steering column member (18, 20, 18a).

15. The method of claim 8 further comprising the step of:
forming the resilient member (44, 46, 44a) in situ with respect to at least one of the steering column member (18, 20, 18a) and the rigid member (30, 32, 34a).

16. The method of claim 14 further comprising the step of:
forming the resilient member (44, 46, 44a) in situ with respect to both of the steering column member (18, 20, 18a) and the rigid member (30, 32, 34a).

17. The method of claim 8 further comprising the step of:
selecting a material for forming the resilient member (44, 46, 44a) in response to a natural frequency of the steering column member (18, 20, 18a).

18. A mounting assembly (10, 12, 14, 16, 10a, 12a) for a steering column of a vehicle comprising:
a steering column member assembly (60) having first and second apertures (22, 24, 22a) extending along first and second aperture axis (26, 28, 26a) respectively;
first and second rigid members (30, 32, 34a) individually extending between respective first and second ends (36, 38, 40, 42, 36a, 38a) along said first and second aperture axis (26, 28, 26a) in said first and second apertures (22, 24, 22a) respectively; and
first and second resilient members (44, 46, 44a) individually extending along said first and second aperture axis (26, 28, 26a) past one of said first and second ends (36, 38, 40, 42, 36a, 38a) of said first and second rigid members (30, 32, 34a).

19. The mounting assembly (10, 12, 14, 16, 10a, 12a) of claim 17 wherein said steering column assembly (60) extends along a column axis (62) and said first and second apertures (22, 24, 22a) are spaced from one another along said column axis (62).

20. The mounting assembly (10, 12, 14, 16, 10a, 12a) of claim 17 wherein said steering column assembly (60) extends along a column axis (62) and said first and second apertures (22, 24, 22a) are mirrored from one another across said column axis (62).

21. The mounting assembly (10, 12, 14, 16, 10a, 12a) of claim 17 wherein said first resilient member (44, 46, 44a) engages said steering column assembly (60) directly and said second resilient member (44, 46, 44a) engages said steering column assembly (60) indirectly.
